# EUROPEAN PATENT APPLICATION

(11) **EP 4 696 922 A1**
(43) Date of publication of application: **18.02.2026**
(21) Application number: 24194274.7
(22) Date of filing: 13.08.2024
(51) Int. Cl.: F16L 58/18, F16L 59/18, F16L 17/03, F16L 17/04

(54) **ANTI-CONDENSATION PROTECTIVE SHELL FOR A PIPE CONNECTION JOINT**

(71) Applicant: Zetaesse S.p.A., 31050 Vedelago (TV) (IT)
(72) Inventor: PALLIOTTO, Luca, 31050 Vedelago (Treviso) (IT); LUISON, Matteo, 31050 Vedelago (Treviso) (IT)
(74) Representative: Feltrinelli, Secondo Andrea

(57) **Abstract**

The present invention relates to a protective anti-condensation shell for a joint (2) for connecting pipes (3a, 3b), the shell consisting of or including two or more parts (4, 5) that can be engaged with each other, each part of two or more parts (4, 5) comprising mechanical engagement means (6, 7).

## Description

### TECHNICAL FIELD OF THE INVENTION

The present invention relates to an anti-condensation protective shell for a pipe connection joint, such as a grooved joint. The present invention also relates to a unit for conveying a fluid, in particular water, mainly cold.

### STATE OF THE PRIOR ART

Condensation is known to form at grooved pipe connection joints, which is mainly due to the temperature difference between the fluid inside the pipes and the surrounding environment. More specifically, when moist air cools on contact with the colder surface of the grooved joint, the humidity in the air can condense, forming water droplets.

This phenomenon can be problematic for several reasons:
- corrosion, as the presence of water can promote corrosion of the metal surfaces of the joints, especially if not treated correctly,
- insulation losses, as condensation can compromise the efficiency of the thermal insulation of the pipes, increasing heat or cold losses, and
- formation of mold and fungi, as humidity can create an environment favorable to the formation of mold and fungi, which can damage the surrounding structures and compromise the quality of the air.

To manage the problem of condensation in grooved pipe connection joints, several strategies can be adopted, such as thermal insulation, anti-corrosion treatments and humidity control.

Furthermore, anti-condensation protective shells have been proposed to prevent the formation of condensation on connection joints of pipes that transport low-temperature fluids.

These shells are usually made of insulating materials that minimize the passage of heat between the external environment and the cold surface of the pipe.

However, the closure of the shells proposed up to now is obtained by means of Velcro, glues or adhesives, which tend to lose their effectiveness with the heat.

As an alternative, solutions have been envisaged that require many pieces to be connected, which leads to long assembly times and high difficulties.

### OBJECTS OF THE INVENTION

An object of the present invention is to provide a novel anti-condensation protective shell for a pipe connection joint, such as a grooved joint.

Another object of the present invention is to provide a shell as aforesaid which is applicable in a simple and rapid manner.

Another object of the present invention is to provide a shell as indicated above which ensures an effective connection around a respective joint.

Another object of the present invention is to provide a new unit for conveying a fluid, in particular water, mainly cold.

According to one aspect of the invention, a shell according to claim 1 is provided.

According to one aspect of the invention, a unit according to claim 14 is provided.

The dependent claims refer to preferred and advantageous embodiments of the invention.

### BRIEF DESCRIPTION OF THE DRAWINGS

Other features and advantages of the invention will be more clearly apparent from the description of embodiments of a shell and a unit, illustrated by way of example in the accompanying drawings in which:
- figure 1 is a slightly top perspective view of a unit according to the present invention,
- figure 2 is an exploded view of the unit of figure 1,
- figures 3 and 4 are top and front views, respectively, of the unit of figure 1,
- figure 5 is a sectional view taken along the line V-V of figure 3,
- figure 6 is a sectional view taken along the line VI-VI of figure 5,
- figures 7 to 9 are perspective views from one side and from above and a frontal view, respectively, of a second half-shell of the unit of figure 1,
- figures 10 to 12 are perspective views from one side and from the other and a frontal view, respectively, of a first half-shell of the unit of figure 1,
- figures 13 to 24 are views similar to figures 1 to 12, respectively, but with reference to another embodiment of unit according to the present invention,
- figures 25 to 30 are views similar to figures 1 to 6, respectively, but with reference to a further embodiment of unit according to the present invention.

In the attached drawings, identical parts or components are distinguished by the same reference numbers.

### EMBODIMENT OF THE INVENTION

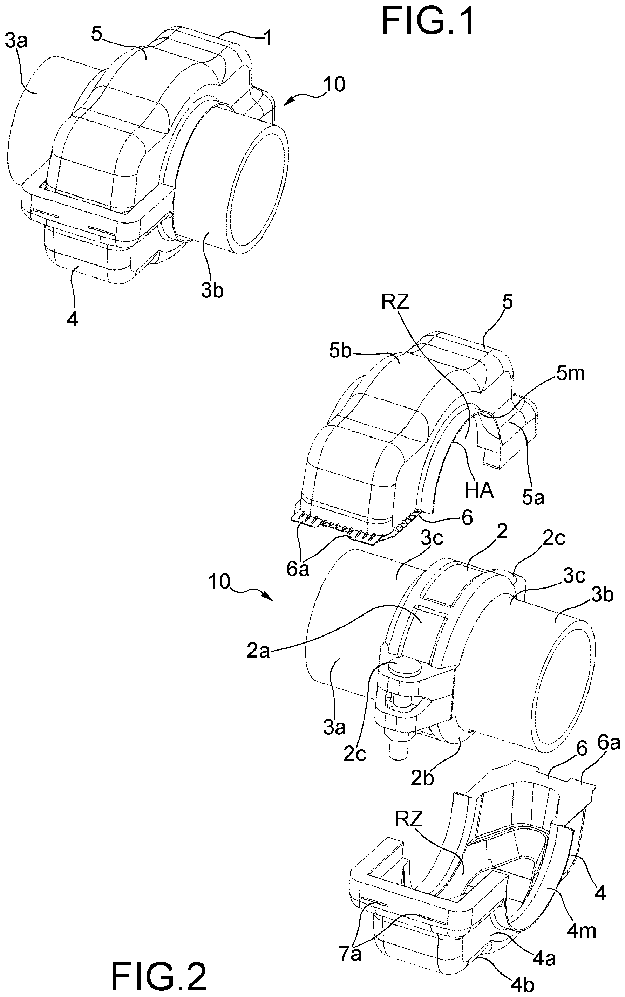

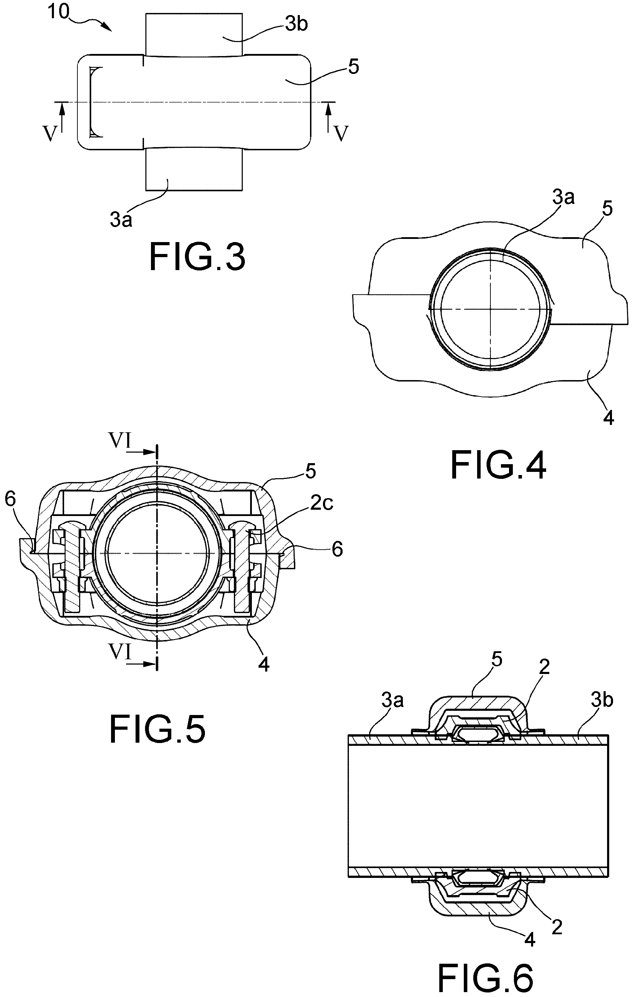

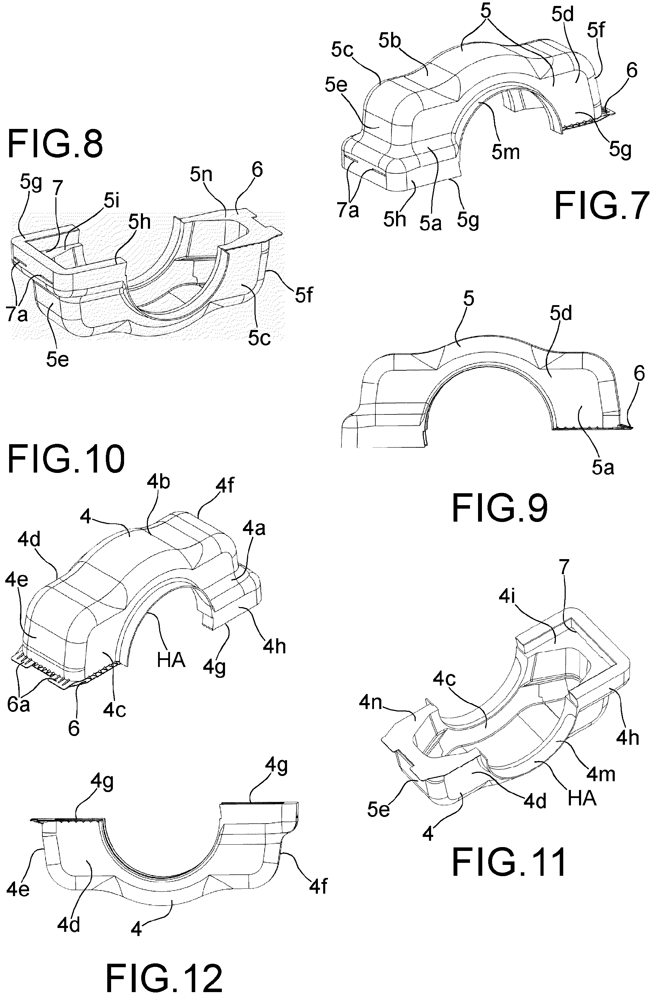

With reference to figures 1 to 12, a first embodiment of an anti-condensation protective shell 1 for a joint 2 for connecting pipes 3a, 3b according to the present invention has been illustrated, in particular a grooved joint 2 for grooved pipes for transporting a fluid, such as water, for example cold water.

Clearly, a shell 1 according to the present invention can be used with pipes 3a, 3b of any size and shape.

Such a shell 1 consists of or includes two or more parts 4, 5 that can be engaged with each other, preferably removably, each part 4, 5 comprising mechanical engagement means 6, 7 designed to mechanically engage, preferably removably, mechanical engagement means 7, 6 of another part 5, 4.

Advantageously, the mechanical engagement means are interlocking or fitting or interference means 6, 7.

The two parts 4, 5 can also be reciprocally movable between an open position of disconnection or release in whole or in part (see figure 2), in which they can be brought around a joint 2 or moved away from it, and a closed position of tightening of and around a joint 2 (see figure 1), in which they are mounted close to and if desired in contact with a joint 2, thus ensuring a thermal seal for this component.

Preferably, the two or more parts consist of two half-shells or two or more shell parts 4, 5 that can be removably or not connected or fixed to each other in a closed tightening position, solely by mechanical engagement, preferably removable, of the respective mechanical engagement means 6, 7, i.e. configurations of specific parts that determine a mechanical interlocking, fitting, coupling or interference such as to ensure the stable and, preferably removable connection of the two or more parts or of the two half-shells 4, 5.

In the following description, reference will often be made to the two half-shells 4, 5, but it is understood that, according to a less preferred variant, more than two shell parts could also be provided, for example three or four, and so as not to weigh down this discussion too much, repeating this will be avoided.

The term "removable" in this description, with reference to the engagement between mechanical engagement means of two half-shells 4, 5, indicates that the latter can be disconnected or uncoupled or brought into the open disconnection or release position from a joint 2, without this requiring destructive steps or steps that could damage the two parts or half-shells 4, 5, which therefore, after the release or disengagement, can, if desired, be reused or brought back into the closed tightening position around a joint 2.

Even more preferably, each half-shell 4, 5 is formed in a single piece, if desired obtained by molding or thermoforming or even in another way, and is made of a suitable material, such as a polymeric or plastic material or other.

According to the embodiment of figures 1 to 12, the two half-shells 4, 5 are two separate pieces and can be engaged, if desired removably, by engaging the respective mechanical engagement means 6, 7.

Therefore, no Velcro, glue or adhesives are necessary to engage or connect or bring the two half-shells 4, 5 into the closed tightening position, nor are screws, bolts or the like, but the engagement between the respective parts of the parts or half-shells 4, 5 is satisfactory.

For the engagement/disengagement, preferably removable, of the two shells or shell parts 4, 5 or in any case to bring them into the closed tightening position or release them from the latter, no tools are necessary, so these steps are quick to be carried out.

If desired, the mechanical engagement means comprise male and female engagement means, such as at least one tongue or projection 6 in a half-shell 4, 5 designed to engage by forced or snap- fitting or insertion a groove or reception opening 7, possibly passing entirely or partially through, in the other half-shell 5, 4. The groove or reception opening 7 is obtained internally to the respective half-shell 5, 4, although, as will also be explained later, it could also have sections or portions 7a passing through the body of the latter 5, 4.

It will be understood that the tongue or projection 6 can have any suitable configuration, for example flat, rounded, thin, thick, regular, irregular, etc.

Each half-shell 4, 5 preferably has a substantially tub- or box-like configuration (clearly open box-like) defining, at opposite walls, two substantially aligned halves or portions HA of a through hole or opening, so that once the two half-shells 4, 5 are assembled or brought into the closed tightening position they together define, at opposite walls or sections of walls, two aligned through holes or openings, each for the passage or reception of an end 3c of a respective pipe 3a, 3b. Clearly, the holes or openings obtained by means of the two halves or portions are preferably of circular section.

More specifically, each half-shell 4, 5 includes a perimeter wall 4a, 5a and a closing wall (if desired, completely or partially curved) 4b, 5b of a first end or edge of the perimeter wall 4a, 5a defining between them a reception zone RZ of half or a portion of a joint 2, which zone RZ is open moving away from the closing wall 4b, 5b, so that the second end or edge of the perimeter wall 4a, 5a is free and not closed.

The perimeter wall 4a, 5a may for example comprise four consecutive sections of perimeter wall 4c-4f, 5c-5f, two of greater extension 4c-4d, 5c-5d, if desired substantially parallel to each other or facing each other, and two of lesser extension 4e-4f, 5e-5f, if desired substantially parallel to each other or facing each other, bridge connecting the two sections of wall of greater extension 4c-4d, 5c-5d.

In this case, the two longer wall sections 4c-4d, 5c-5d each delimit, preferably centrally, half or a portion HA of a through hole or opening for receiving an end 3c of a respective pipe 3a, 3b, which half or portion HA of a hole or opening is open away from the closing wall 4b, 5b and also opens into the receiving zone RZ.

In addition, to define the halves or portions HA, a deflector 4m, 5m may be provided with a semi-circular configuration, for example, extending transversally towards the outside of the shell 1 starting from the perimeter wall 4a, 5a or better still from a section of the latter with a greater extension 4c-4d, 5c-5d than the respective half-shell 4, 5.

The perimeter wall 4a-5a of a half-shell includes a free or edge distal 4g, 5g from the closing wall 4b, 5b for abutment and/or enclosing and/or insertion of/into the free edge 5g, 4g of the other half-shell 5, 4. Preferably, each free or distal edge 4g, 5g is made up of a section of lesser extension 4e-4f, 5e-5f and the free edge of the terminal parts of the sections of greater extension 4c-4d, 5c-5d, the latter defining, preferably centrally, as indicated above, half or a portion HA of a through hole or opening.

In use, when the two half-shells 4, 5 are assembled together or brought into the closed tightening position, the free edge 4g of a half-shell 4 is engaged in abutment and/or enclosing and/or insertion of/into the free edge 5g of the other half-shell 4, 5.

If desired, in the assembled condition or closed tightening position, part of the free edge 4g of a first half-shell 4 enclosing engages the free edge 5g of the other or second half-shell 5 and part of the free edge 4g of the first half-shell 4 is engaged in insertion into the free edge 5g of the other half-shell 4, 5.

In relation to this aspect, a part of the free edge 4g, 5g of a half-shell 4, 5 designed to enclose a part of the free edge 5g, 4g of the other half-shell 5, 4 preferably has, from the outside towards the inside or approaching the respective closing wall 4b, 5b, a section of projecting wall 4h, 5h made up of two or three segments inclined to each other, for example at approximately 90° to one another, preferably substantially U-shaped, if desired followed by an internal shoulder 4i, Si of abutment on a section of the edge of the other half-shell.

A part 4n, Sn of free edge 4g, 5g of a semi-shell 4, 5 instead designed to be enclosed by a part of the free edge 5g, 4g of the other semi-shell 5, 4 has, preferably, a plate-like or in any case laminar configuration designed to be received within the zone defined by the section of projecting wall 4h, Sh and preferably in contact with the internal shoulder 4i, 5i. This part of free edge 4g, 5g can have a thickness slightly greater than the respective sections of perimeter wall 4a-5a.

Always in the assembled condition or closed tightening position, the two half-shells 4, 5 are engaged with each other so that the respective halves or portions HA of the hole or opening are arranged so as to define two complete holes or openings, substantially aligned, each for the passage or housing of an end 3c of a respective pipe 3a, 3b.

Furthermore, in the assembly condition or closed tightening position, the two half-shells 4, 5 can tighten or preferably be in internal contact with respective portions of a grooved joint 2, so that the receiving zones RZ are appropriately sized.

According to the non-limiting embodiment illustrated in the figures, the at least one tongue or projection 6 is advantageously, but not necessarily provided at the or extends from the free edge 4g, 5g (from a respective part 4n, 5n) in a section of wall of lesser extension 4e-4f, 5e-5f of a semi-shell 4, 5 moving away from the half or portion HA, while the other semi-shell 5, 4 defines an opening or groove 7 for receiving the at least one tongue or projection 6, if desired, but not necessarily in a section of wall of lesser extension 4e-4f, 5e-5f of the respective free edge 5g, the opening or groove 7 extending from the receiving zone RZ away from the latter.

Clearly, the at least one tongue or projection 6 could additionally or alternatively be provided in the wall sections of greater extension 4c-4d, 5c-5d.

According to the non-limiting embodiment illustrated in the figures, the at least one tongue or projection 6 extends from a wall section of lesser extension 4e-4f, 5e-5f and from part of the wall sections of greater extension 4c-4d, 5c-5d of the same semi-shell 4, 5, so as to have a substantially U-shaped configuration, while the groove 7 extends for a wall section of lesser extension 5e-5f, 4e-4f and for part of the wall sections of greater extension 5c-5d, 4c-4d of the same semi-shell 5, 4, so as to present a U-shaped configuration.

Moreover, the at least one tongue or projection 6 could have one, two or more protruding appendages 6a, for example at a section of wall of smaller extension 4e-4f, 5e-5f and designed to engage one, two or more sections or portions 7a of the opening or groove 7 passing through the body of the respective half-shell.

Preferably, the at least one tongue or projection 6 extends from a part or section 4n of the free edge 4g of a first half-shell 4 in engagement with insertion into the free edge 5g of the other half-shell 4, 5, while the at least one opening or groove 7 is provided in a section of the free edge 4g in enclosing engagement of the free edge 5g of the other or second half-shell 5, if desired in the possible section of projecting wall 4h, Sh.

As previously indicated, at least one appendix 6a of the at least one tongue or projection 6 is, preferably, inserted or fitted through a through section or portion 7a of the opening or groove 7 so as to protrude slightly from it and possibly result with its own tip on the outside of the shell 1. This possible expedient could serve to ensure the possibility of engaging the tongue or projection 6 or the respective appendix 6a for the decoupling of the half-shells 4, 5 or to ensure from the outside the engagement between the tongue 6 and the opening 7.

In accordance with the embodiment of figures 1 to 12, at least one tongue or projection 6 is provided or extends at the freed edge 4g in or from a section of wall of lesser extension 4e of a first half-shell 4, while at the free edge 4g in the other section of wall of lesser extension 4f of the first half-shell 4 is provided at least one opening 7 for receiving, in use, a tongue or projection 6 of the second semi-shell 5. In this case, the at least one tongue or projection 6 can also extend from part of the sections of wall of greater extension 4c-4d so as to have a substantially U-shaped configuration, while the groove 7 can also extend for part of the sections of wall of greater extension 4c-4d of the same semi-shell 4 so as to have a U-shaped configuration.

Furthermore, at the free edge 5g in a section of the wall of lesser extension 5f of the second half-shell 5 and if desired also for part of the sections of the wall of greater extension 5c-5d, at least one tongue or projection 6 is provided or extends, which can be housed in at least one receiving opening or groove 7 in the first half-shell 4, while at the free edge in the other section of the wall of lesser extension 5e of the second half-shell 5 and if desired in part of the sections of the wall of greater extension 5c-5d, a receiving opening 7 of the at least one tongue or projection 6 of the first half-shell 4 is provided.

According to the embodiment illustrated in the figures, one, two or more appendages 6a of a tongue or projection 6 extending from the same section of wall of smaller extension 4e of a first semi-shell 4 and one, two or more sections or portion 7a of a reception opening or groove 7 obtained in the other section of wall of smaller extension 4f of the first semi-shell 4 are provided.

Moreover, in this case, if desired, one, two or more appendices 6a are provided, extending from the same section of wall of lesser extension 5f of a second half-shell 5 and one, two or more sections or portions 7a of a receiving opening or groove 7 obtained in the other section of wall of lesser extension 5e of the second half-shell 5.

According to this variant, in use or in the installation condition or closed tightening position:
a section or series of consecutive sections with at least one tongue or projection 6 of the free edge 4g of a first half-shell 4 is in engagement of insertion into a respective section or series of consecutive sections in the free edge 5g of the other half-shell 5 defining the at least one opening or groove 7, while
a section or series of consecutive sections with at least one tongue or projection 6 of the free edge 5g of a second half-shell 5 is in engagement of insertion into a respective section or series of consecutive sections in the free edge 4g of the other half-shell 4 defining the at least one opening or groove 7.

As it will be understood, for the assembly or mounting of a shell 1 on and around a joint, possibly grooved 2 mounted on two pipes 3a, 3b so as to connect them, the parts or half-shells 4, 5 are brought around the joint 2 and then approached so as to engage the respective mechanical engagement means 6, 7, thus bringing the shell 1 into the closed clamping position. This step can be carried out for example, with reference to the specific embodiment of figures 1 to 12, by manually controlling and possibly using a specific tool the insertion of each tongue or projection 6 of a half-shell 4, 5 into an opening or groove 7 in the other half-shell 4, 5 and possibly some appendages 6a into the through sections or portions 7a.

It is reiterated that no Velcro, glue or adhesives are therefore necessary to engage or connect or bring the two half-shells 4, 5 into the closed tightening position and, if desired, not even screws, bolts or similar, but the mechanical engagement, preferably removable, between the respective parts of the parts or half-shells 4, 5 is satisfactory.

Therefore, for the engagement/disengagement of the two shells 4, 5 or in any case to bring them into the closed tightening position or release them from the latter, no tools are necessary, so these steps are quick.

If desired, the shell 1 can also be dismantled or brought into the open disconnection or release position by disengaging, always manually and if desired using a special tool, the mechanical engagement means 6, 7.

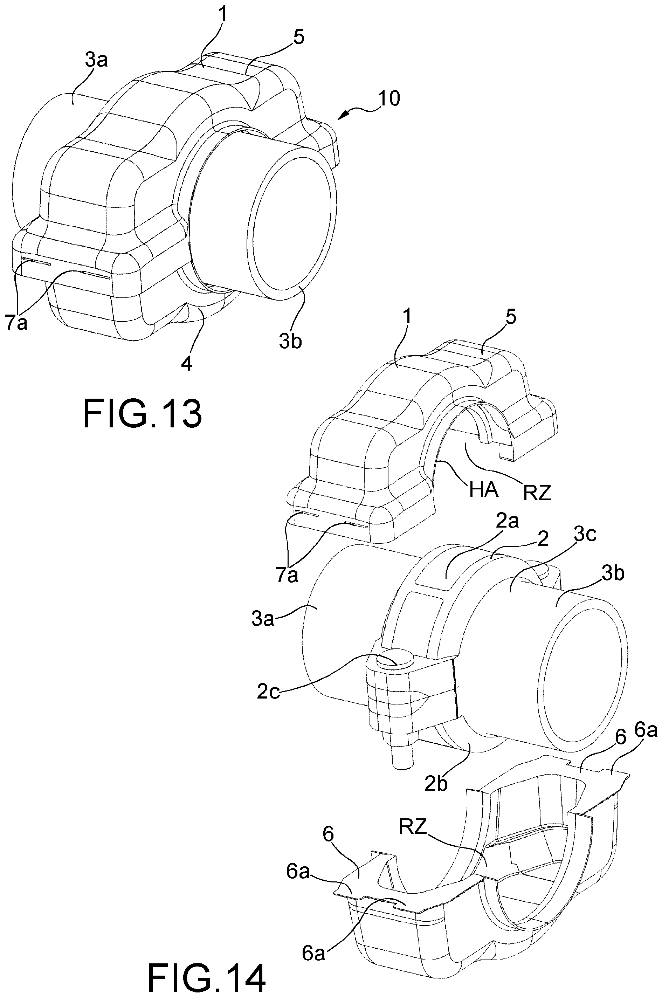

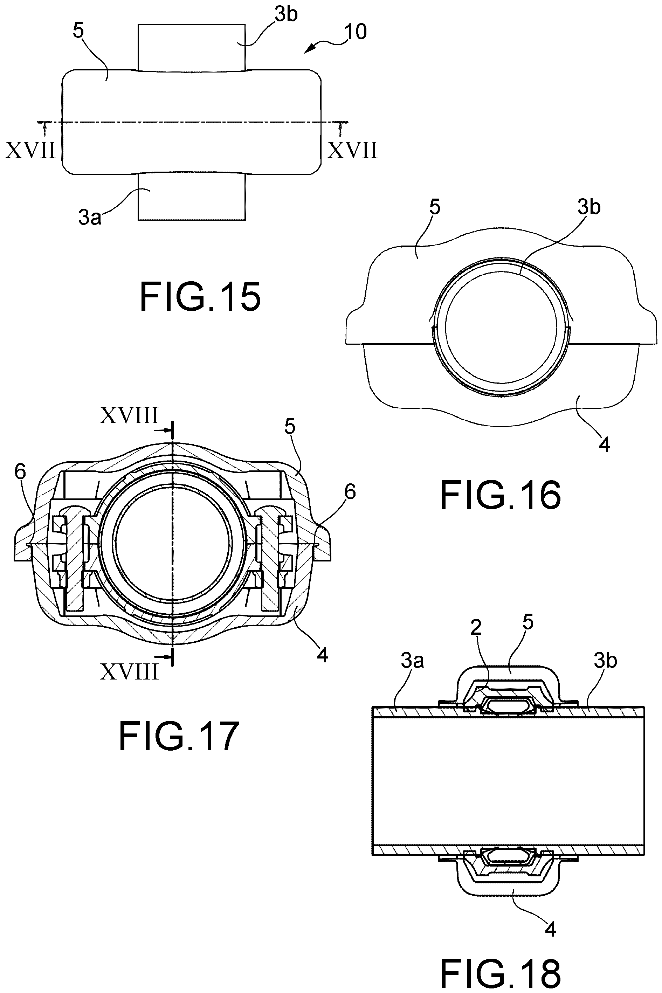

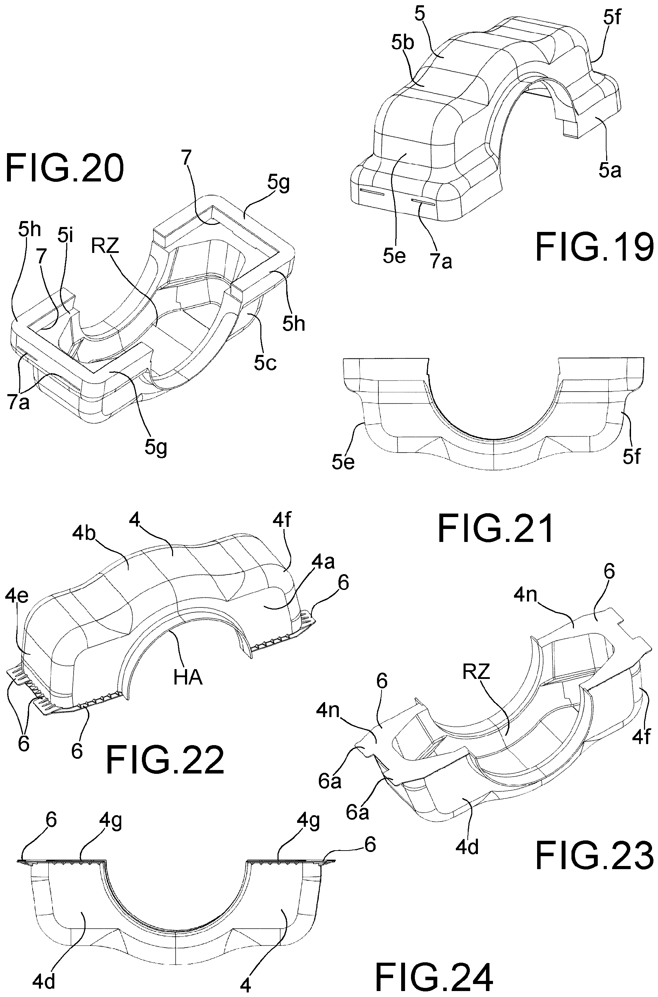

As regards now the embodiment of figures 13 to 24, it corresponds substantially to the example of figures 1 to 12, but at the free edge in each section of the wall of minor extension 4e-4f of a first half-shell 4 and if desired also for part of the sections of the wall of major extension 4c-4d, at least one tongue or projection 6 is provided or extends, while at the free edge in both sections of the wall of minor extension 5e-5f of the second half-shell 5 and if desired also for part of the sections of the wall of major extension 5c-5d, the opening or groove 7 is provided internally for receiving a respective tongue or projection 6 of the first semi-shell 4.

If desired, one, two or more appendages 6a are provided extending from each section of the wall of lesser extension 4e, 4f of the first half-shell 4 and one, two or more sections or through portions 7a of a receiving opening 7 obtained in each section of the wall of lesser extension 5e, 5f of the second half-shell 5.

In this case, in use or in the installation condition or closed tightening position, two sections or two pairs of consecutive sections of the free edge 4g of a first half-shell 4 are in engagement of insertion in respective sections or pairs of consecutive sections in the free edge 5g of the other half-shell 4, 5.

According to the embodiment of figures 13 to 24, the two half-shells 4, 5 are two entirely separate pieces that can be engaged and carried in the closed tightening position, if desired removably, by engaging the respective mechanical engagement means 6, 7.

For mounting or assembling a shell 1 in accordance with this embodiment, the same applies as indicated for the example of figures 1 to 12, also in this case Velcro, glue or adhesives are not necessary to engage or connect the two half-shells 4, 5 and, if desired, not even screws, bolts or similar, but the mechanical engagement between the respective parts of the parts or half-shells 4, 5 is satisfactory.

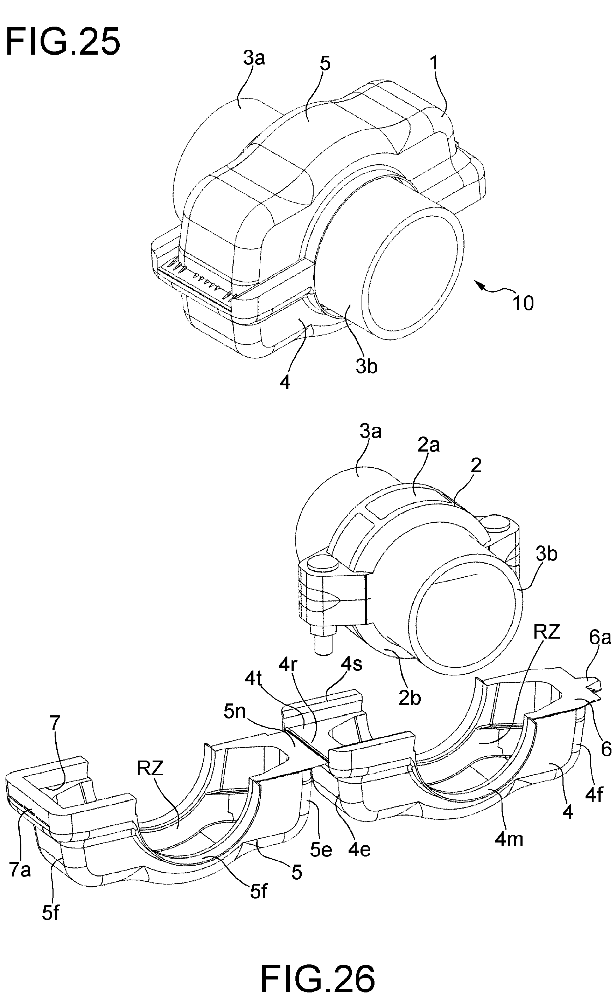

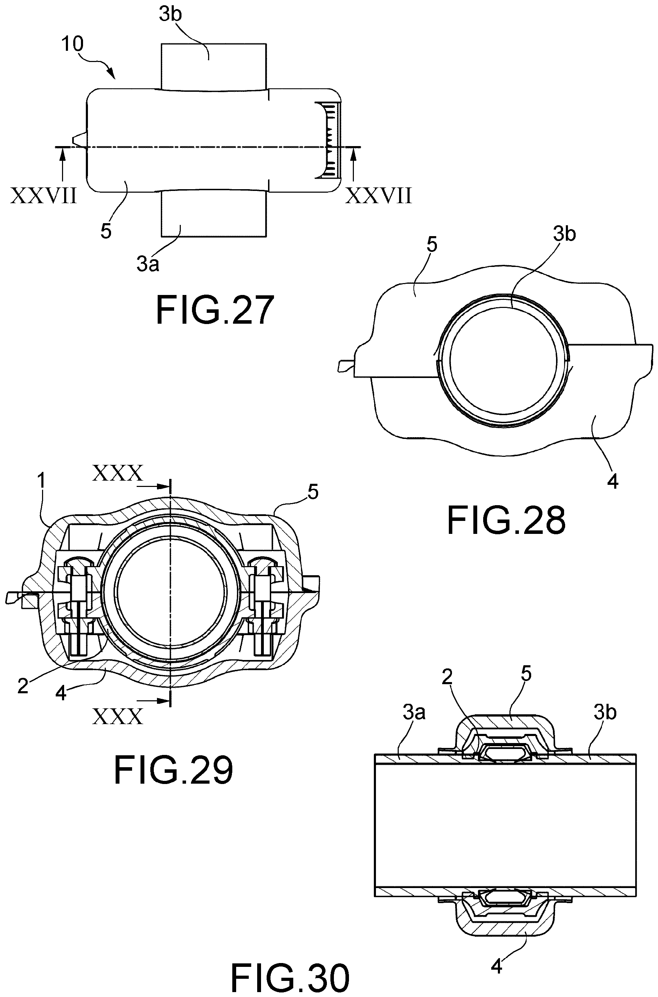

According to the embodiment of figures 25 to 30, it essentially corresponds to the example of the figures described above, but the two half-shells 4, 5 are irremovably connected or constrained or hinged to each other at (only) one respective end or side or section.

In this case, preferably, the two half-shells 4, 5 are rotatable or angularly displaceable with respect to each other, but formed in a single piece, if desired obtained by molding or thermoforming or even in another way, and are made of a suitable material, such as a polymeric material or plastic or other. Therefore, in this case, the two half-shells 4, 5 cannot be entirely detached from each other, unless destructive interventions are performed.

According to this variant, the two half-shells 4, 5 are hinged (only) at one of their own sections, for example at a section of the smaller wall 4e, 5e, by means of a respective fin or projecting protuberance 4r, 5r.

At the free edge 4g in or from another wall section of lesser extension 4f of a first semi-shell 4 and if desired also for part of the wall sections of greater extension 4c-4d adjacent to it, at least one tongue or projection 6 is provided or extends, while at the free edge in a wall section of lesser extension 5f of the second semi-shell 5 and if desired also for part of the wall sections of greater extension 5c-5d adjacent to it, an opening 7 is provided to receive the at least one tongue or projection 6 of the first semi-shell 4.

Moreover, the at least one tongue or projection 6 could have one, two or more protruding appendages 6a, for example at a section of wall of smaller extension 4f, 5f and designed to engage one, two or more sections or portions 7a of the opening or groove 7 passing through the body of the respective half-shell.

Even in this case the two parts or half-shells 4, 5 can be mutually movable between an open position of disconnection or release in whole or in part (see figure 26), in which they can be brought around a joint 2 or moved away from it, and a closed position of tightening of and around a joint 2 (see figure 25), in which they are mounted close to and if desired in contact with a joint 2 thus ensuring a thermal seal for this component.

According to these variants, the two half-shells 4, 5 are assembled or better closed one on the other and around a joint, if desired grooved 2 mounted on two pipes 3a, 3b by inserting, after an appropriate rotation or relative angular movement of the half-shells 4, 5 around the sections 4e, 5e or hinge fins 4r, 5r, the at least one projection 6 extending from a section of wall of smaller extension 4f (and if desired also from part of the wall sections of greater extension 4c-4d) of a first half-shell 4 into the opening 7 in the section of wall of smaller extension 5f of the second half-shell 5 and if desired also in part of the wall sections of greater extension 5c-5d.

In relation to this aspect, a section 4e of free edge 4g of a semi-shell 4 is designed to enclose and if desired receive a section 5e of free edge 5g of the other semi-shell 5 and preferably has, from the outside towards the inside or approaching the respective closing wall 4b, 5b, sections of protruding wall 4s made up of two or three sections, if desired parallel to each other and spaced apart, if desired followed by an internal shoulder 4t for abutment of a section of edge of the other semi-shell. The sections of protruding wall 4s could have a main extension dimension substantially parallel to the direction from a section of smaller extension 4e to the other 4f.

Moreover, also according to the variant under examination, the two or more parts consist of two half-shells 4, 5 which can be moved removably into the closed tightening position (figure 26), solely by mechanical engagement, preferably removable, of the respective mechanical engagement means 6, 7, i.e. configurations of specific parts which determine a mechanical interlocking, fitting, coupling or interference such as to ensure the stable and, preferably removable, connection of the two or more parts or of the two half-shells 4, 5.

Subject-matter of the present invention is also a unit 10 for conveying a liquid or gas, for example water, for example cold water, comprising at least two pipes 3a, 3b and at least one connection joint 2 of the at least two pipes 3a, 3b.

The joint 2 and the pipes 3a, 3b can be made in any suitable way.

Thus, for example, the joint 2 could comprise two or more parts, in particular semi-annular parts 2a, 2b, which can be removably connected to each other by means of screws or bolts 2c, which parts 2a, 2b are internally shaped so as to engage directly or by means of an intermediate element, respective grooves or portions of the pipes 3a, 3b. If desired, gaskets or similar can also be provided between the joint 2 and the pipes 3a, 3b.

The unit 10 also comprises at least one shell 1 applied around the connection joint 2 in order to provide a means of anti-condensation protection, and thus a thermal seal for the joint 2. The shell 1 is preferably applied so as to effectively define a fluid-tight zone for the joint 2.

In this regard, as already partly indicated, for the installation the parts or semi-shells 3a, 3b are brought around the joint 2 and then approached so as to bring them into the closed tightening position, in which they completely enclose the joint 2, determining an engagement of the mechanical engagement means 6, 7 of the parts or semi-shells 4, 5.

This step can be carried out, for example, by manually checking and, if desired, using a special tool, the engagement or interlocking of the mechanical engagement means 6, 7, without the need for Velcro, glues or adhesives and, if desired, not even screws, bolts or similar.

Thanks to this measure, no tools are needed to engage/disengage the two shells 4, 5 or, in any case, to bring them into the closed tightening position or release them from the latter, so these steps are quick.

Moreover, the engagement between the mechanical engagement means in a shell according to the present invention is preferably removable, so that it is possible to release the shell 1 from a joint 2 without breaking it, while according to the state of the prior art, if glues or similar are used it is necessary to destroy the joint to disassemble it.

It will therefore be understood that the present invention provides a new anti-condensation protective shell for a pipe connection joint, which can be applied in a simple and rapid manner, while still ensuring an effective connection around a respective joint.

Modifications and variations of the invention are possible within the scope defined by the claims.

## Claims

1. Anti-condensation protective shell for a joint (2) for connecting pipes (3a, 3b), said shell consisting of or including two or more parts (4, 5) that can be engaged with each other, wherein each part of two or more parts (4, 5) comprises mechanical engagement means (6, 7) designed to mechanically engage mechanical engagement means (7, 6) of another part of two or more parts (4, 5).

2. Protective shell according to claim 1, wherein said engagement means are interlocking or fitting or interference means (6, 7).

3. Protective shell according to claim 1 or 2, wherein said two or more parts consist of two half-shells or two or more shell parts (4, 5) mutually movable between an open position of disconnection or release in whole or in part, in which they can be mounted around a joint (2) or moved away from it, and a closed position of tightening of and around a joint (2), in which they can be mounted close to a joint (2) thus ensuring a thermal seal to such component, said two or more shell parts (4, 5) being connectable to each other or fixable in the closed tightening position solely by mechanical engagement of the respective mechanical engagement means (6, 7).

4. Shell according to any of the preceding claims, wherein said mechanical engagement means comprise male and female engagement means.

5. Shell according to claim 4, wherein said male and female engagement means comprise at least one tongue or projection (6) in a half-shell or part of a shell (4, 5) designed to engage by forced or snap- fitting or insertion a receiving opening or groove (7) in the other half-shell (5, 4) or in the other or in another part of the shell.

6. Shell according to any of the preceding claims when dependent on claim 3, wherein each half-shell or shell part (4, 5) has an open tray or box-like configuration defining two substantially aligned halves or portions (HA) of a through hole or opening, so that once the two half-shells (4, 5) or said two or more shell parts are brought into the closed tightening position, they together define two aligned through holes or openings, each housing an end (3c) of a respective pipe (3a, 3b).

7. Shell according to claim 6, comprising a perimeter wall (4a, 5a) and a closing wall (4b, 5b) of a first end or edge of the perimeter wall (4a, 5a) defining between them a receiving zone (RZ) of half or a portion of a joint (2), which receiving zone (RZ) is open away from the closing wall (4b, 5b).

8. Shell according to claim 7, wherein said perimeter wall (4a, 5a) comprises four perimeter wall sections (4c-4f, 5c-5f), two with greater extension (4c-4d, 5c-5d) and two with lesser extension (4e-4f, 5e-5f) for bridge connecting the two wall sections with greater extension (4c-4d, 5c-5d),
the two sections of walls of greater extension (4c-4d, 5c-5d) each delimiting half or a portion (HA) of a hole or through opening for receiving an end (3c) of a respective pipe (3a, 3b), which half or portion (HA) of a hole or opening is open away from the closing wall (4b, 5b) and also opens into the receiving zone (RZ).

9. Shell according to claim 7 or 8, wherein said perimeter wall (4a-5a) of a half-shell or part of a shell (4, 5) includes a free or edge (4g, 5g) distal from the closing wall (4b, 5b) for abutting and/or enclosing and/or inserting the free edge (5g, 4g) of the other half-shell or of the other or of another part of the shell (5, 4).

10. Shell according to claim 5 and 8 or 5 and 9, wherein said at least one tongue or projection (6) is provided at the free edge (4g, 5g) at least in a wall section of minor extension (4e-4f, 5e-5f) of a half-shell or another part of shell (4, 5), while the other half-shell or the other or another part of shell (5, 4) defines an opening or groove for receiving (7) said at least one tongue or projection (6) at least in a wall section of minor extension (5e-5f, 4e-4f) of the respective free edge (5g, 4g).

11. Shell according to claim 9 or 10, wherein said at least one tongue or projection (6) extends from a portion of the free edge (4g, 5g) of a half-shell or shell part (4, 5) in engagement of insertion into the free edge (5g, 4g) of the other half-shell or of the other or another shell part (5, 4), while the at least one receiving opening or groove (7) is provided in a portion of the free edge (5g, 4g) of a half-shell or shell part (5, 4) in enclosing engagement of the free edge (4g, 5g) of the other or second half-shell or other shell part (4, 5).

12. Shell according to claim 10 or 11, wherein said at least one tongue or projection (6) is provided or extends at the free edge (4g) in or from a wall section of minor extension (4e) of a first half-shell (4), while said at least one opening or receiving groove (7) is provided at the free edge (4g) in the other wall section of minor extension (4e) of the first half-shell (4),
at the free edge (5g) in a wall section of minor extension (5f) of the second half-shell (5) said at least one tongue or projection (6) is provided or extends that can be housed in said receiving opening or groove (7) of the first half-shell (4), while said at least one opening or groove (7) for receiving said tongue or projection (6) of said first half-shell (4) is provided at the free edge (5e) in the other wall section of minor extension (5f) of the second half-shell (5).

13. Shell according to claim 10 or 11, wherein at least one tongue or projection (6) is provided at the free edge in each wall section of minor extension (4e-4f) of a first half-shell (4),
while at the free edge in both wall sections of minor extension (5e-5f) of the second half-shell (5) said opening or groove (7) is provided for receiving a respective tongue or projection (6) of said first half-shell (4).

14. Shell according to any of claims 1 to 11, wherein said two half-shells or shell parts (4, 5) are irremovably connected or constrained or hinged to each other at a respective end or side or section, said two half-shells or two or more shell parts (4, 5) being movable with respect to each other, but formed in a single piece.

15. Shell according to any one of the preceding claims when dependent on claim 2, wherein no Velcro, glues, adhesives, screws, bolts or similar are provided to bring said two half-shells or said two or more shell parts (4, 5) into the closed tightening position, but for this purpose the mechanical engagement between said mechanical engagement means (6, 7) is satisfactory.

16. Unit for conveying a liquid or a gas comprising at least two pipes (3a, 3b) and at least one connecting joint (2) of said at least two pipes (3a, 3b), said unit further comprising at least one shell according to any of the preceding claims applied around said connecting joint in order to provide a means of protection against condensation.
